# EUROPÄISCHE PATENTSCHRIFT

(11) **EP 1 737 721 B1**
(45) Veröffentlichungstag und Bekanntmachung des Hinweises auf die Patenterteilung: **09.01.2008**
(21) Anmeldenummer: 05737402.7
(22) Anmeldetag: 09.04.2005
(51) Int. Cl.: B62D 5/00, B62D 5/065, B62D 6/00

(54) **HYDRAULISCHES SERVOLENKSYSTEM**
HYDRAULIC POWER-ASSISTED STEERING SYSTEM
SYSTEME DE DIRECTION ASSISTEE HYDRAULIQUE

(30) Priorität: 22.04.2004 DE 102004019526
(43) Veröffentlichungstag der Anmeldung: 03.01.2007
(73) Patentinhaber: Bayerische Motorenwerke Aktiengesellschaft, 80809 München (DE)
(72) Erfinder: NAGY, Imre, 85386 Eching (DE); MUELLER, Steffen, 81669 München (DE)
(86) Internationale Anmeldenummer: PCT/EP2005/003763
(87) Internationale Veröffentlichungsnummer: WO 2005/105547

(56) Entgegenhaltungen:
- EP-A- 1 508 499
- PATENT ABSTRACTS OF JAPAN Bd. 010, Nr. 301 (M-525), 14. Oktober 1986 (1986-10-14) -& JP 61 113561 A (KOYO SEIKO CO LTD), 31. Mai 1986 (1986-05-31)

## Beschreibung

Die Erfindung betrifft ein hydraulisches Servolenksystem für ein Kraftfahrzeug, mit einem Drehschieberventil und einem wahlweise veränderbar auf seinen beiden Stirnseiten verschieden mit Hydraulikmedium beaufschlagbaren Rückwirkkolben, der beaufschlagungsabhängig ein Moment auf den Drehschieber überträgt, das eine Veränderung des an einer Lenkhandhabe resultierenden Handmoments des Fahrers zur Folge hat, derart, dass außer einem Unterstützungsmoment auch ein Überlagerungsmoment zum Handmoment erzeugt werden kann, welches zu einer Vergrößerung des Handmoments oder zu einer Umkehr der Richtung des Handmoments führt. Zum Stand der Technik wird neben der sog. Servotronic^{®} der Firma ZF-Lenksysteme (bspw. beschrieben in der Firmendruckschrift G8000P-WG2/97d der ZF Friedrichshafen AG, Geschäftsbereich Lenkungstechnik, D-73522 Schwäbisch Gmünd) auf die nicht vorveröffentlichte EP 1 508 499 A2 verwiesen, die ein hydraulisches Servolenksystem mit den oben genannten Merkmalen offenbart (Stand der Technik gemäß Art. 54(3) EPÜ).

In dieser nicht vorveröffentlichten Patentanmeldung ist ein Lenksystem beschrieben, das auf einem vergleichsweise einfachen und daher preiswerten hydraulischen Servolenksystem aufbaut, welches mit einem hydraulischen Drehschieber-Ventil gesteuert wird, das über einen Drehstab vom Lenkrad (allgemein der Lenkhandhabe des Fzg.-Fahrers) aus betätigt wird und bei dem durch Öffnen eines elektro-hydraulischen Wandlers und durch weitere hydraulische Elemente an einem Rückwirkkolben eine Druckdifferenz erzeugt wird. Hierdurch wird am Drehschieber ein Drehmoment erzeugt, das zu einer Veränderung des Handmoments am Lenkrad führt. Beim üblichen, einfachen Servolenksystem kann dabei abhängig von der Richtung der Verdrehung des Drehschiebers am Rückwirkkolben entweder eine positive oder eine negative Druckdifferenz und über diese ein Unterstützungsmoment zum Handmoment erzeugt werden. Beim Lenksystem nach der Patentanmeldung EP 1 508 499 A2 kann nun das Rückwirkmoment auf die Lenkhandhabe unabhängig von der Amplitude und der Richtung einer Lenkvorgabe gesteuert werden. Das Drehschieberventil des hydraulischen Servolenksystems kann also derart modifiziert sein, dass unabhängig von der Amplitude und Richtung einer Verdrehung des Drehschiebers relativ zu einer Steuerbuchse des Drehschieberventils außer einem Unterstützungsmoment auch ein Überlagerungsmoment erzeugt werden kann, welches zu einer Vergrößerung oder Verringerung des Handmoments oder zu einer Umkehr der Drehrichtung des Handmoments führt. Hierdurch wird also erreicht, dass das Handmoment an der Lenkhandhabe hinsichtlich Amplitude und Richtung beliebig verändert werden kann.

Hierdurch kann dem Fahrer des Fahrzeugs eine veränderte fahrdynamische Situation angezeigt werden, wie beispielsweise eine Tendenz zum Über- oder Untersteuern des Fahrzeugs bei Kurvenfahrt. Der Fahrer spürt dann bspw. ein Ausweichen des Lenkrades auf seine Lenkbewegung und wird dadurch zu einer entsprechenden Korrektur seiner Lenkbewegung gedrängt. Darüber hinaus kann eine solche Erzeugung eines Überlagerungsmoments mittels einer Servolenkeinrichtung genutzt werden, um während eines Einpark- oder Ausparkvorgangs des Fahrzeugs dem Fahrer eine vorteilhafte Lenkbewegung anzuzeigen. Schließlich kann hiermit dem Fahrer durch Erzeugen eines Überlagerungsmoments am Lenkrad während einer Straßenfahrt eine sinnvolle Lenkrichtung angezeigt werden, so dass dieser sein Fahrzeug innerhalb der zu nutzenden Fahrspur hält.

Bei der bereits mehrfach genannten nicht vorveröffentlichten Patentanmeldung EP 1 508 499 A2 wird - ebenso wie bei der vorliegenden Erfindung - das sog. Überlagerungsmoment von der für das Erzeugen des Unterstützungsmoments vorgesehenen Einrichtung erzeugt. Hierzu ist das Drehschieberventil geeignet modifiziert und es kann eine hydraulische Umkehrschaltung vorgesehen sein, mit der das Unterstützungsmoment und das Überlagerungsmoment durch Umkehr der Wirkrichtung eines Aktuators erzeugt werden können. Als Alternative für eine Umkehrschaltung kann eine hydraulische Brückenschaltung vorgesehen sein, mit der das Überlagerungsmoment durch Veränderung der Druckrichtung an einem Aktuator erzeugt werden kann.

Zum Stand der Technik wird auch auf das Patent Abstract of Japan zur JP 61113561 verwiesen, das ein hydraulisches Servolenksystem mit einem Rüchwirkkolben offenbart, wobei zur gewünschten hydraulischen Beaufschlagung des Rückwirkkolbens eine von einem geeignet ansteuerbaren Elektromotor angetriebene Fördervorrichtung vorgesehen ist.

Auch bei der vorliegenden Erfindung wird mit einem modifizierten Drehschieberventil gearbeitet, das zwar noch einen üblichen Rückwirkkolben enthält, der von zwei Seiten mit Hydraulikmedium beaufschlagbar ist und beaufschlagungsabhängig ein Moment auf den Drehschieber überträgt, das eine Veränderung des an der Lenkhandhabe resultierenden Handmoments zur Folge hat.

Anstelle einer hydraulischen Brückenschaltung oder einer Umkehrschaltung sollen jedoch andere Maßnahmen aufgezeigt werden, mit Hilfe derer der Rückwirkkolben in praktisch beliebiger Weise (wie individuell gewünscht) an seinen beiden Seiten verschieden mit Hydraulikmedium beaufschlagt werden kann (= Aufgabe der vorliegenden Erfindung).
Dabei sei darauf hingewiesen, dass selbstverständlich nur dann ein unterschiedlicher Hydraulikdruck an den beiden Stirnseiten des Rückwirkkolbens erforderlich ist, wenn ein Moment,-d.h. ein Unterstützungsmoment oder ein Überlagerungsmoment an der Lenkhandhabe gewünscht ist.

Zur Lösung dieser Aufgabe ist ein hydraulisches Servolenksystem der eingangs genannten Art vorgeschlagen, wobei zur gewünschten hydraulischen Beaufschlagung des Rückwirkkolbens eine von einem geeignet ansteuerbaren Elektromotor angetriebene Fördervorrichtung vorgesehen ist, die Hydraulikmedium aus einem im wesentlichen drucklosen Abschnitt des Hydraulikkreislaufs des Servolenksystems bezieht. Vorteilhafte Aus- und Weiterbildungen sind Inhalt der Unteransprüche.

Vorgeschlagen wird somit, den sog. Rückwirkkolben eines ansonsten im wesentlichen üblichen Drehschieberventils eines hydraulischen Servolenksystems mit Hydraulikmedium aus dessen Kreislauf zu beaufschlagen, wobei diese Beaufschlagung hinsichtlich Intensität und Richtung, d.h. an welche Stirnseite des beidseitig beaufschlagbaren Rückwirkkolbens der höhere Hydraulikdruck angelegt wird, variierbar ist, und zwar mittels einer Fördervorrichtung für das Hydraulikmedium, die von einem gezielt ansteuerbaren Elektromotor angetrieben wird. Die Ansteuerung des Elektromotors erlaubt auf einfache Weise eine nahezu beliebige Einstellung der Druckverhältnisse am Rückwirkkolben (und somit eine beliebige Einstellung des Handmoments am Lenkrad oder dgl.), wobei der Elektromotor hierzu von einer elektronischen Steuereinheit geeignet angesteuert werden kann. Dabei ist es aus Fertigungs-, Montage- und Bauraumgründen sowie im Hinblick auf die Verlegung hydraulischer Leitungen oder Kanäle besonders vorteilhaft, wenn die Fördervorrichtung mit dem Elektromotor am Drehschieberventil angebaut ist und das Hydraulikmedium aus einer sog. Tank-Rücklaufleitung des Hydraulikkreislaufs des Servolenksystems bezieht.

Wenn hier von der Verwendung eines ansonsten im wesentlichen üblichen Drehschieberventils eines hydraulischen Servolenksystems gesprochen wird, sei darauf hingewiesen, dass dieses besondere Elemente, wie insbesondere einen Steller zur Erzeugung unterschiedlicher sog. Unterstützungskennlinien in Abhängigkeit von der Fahrgeschwindigkeit des Fahrzeugs (vgl. hierzu auch die eingangs genannte Firmendruckschrift) nicht weiter enthalten muss. Eine solche Funktionalität lässt sich nämlich auch mit der vorgeschlagenen elektromotorisch angetriebenen Fördervorrichtung, die hydraulisch mit den beiden Stirnseiten des besagten Rückwirkkolbens verbindbar ist, darstellen.

Die genannte Fördervorrichtung kann in Form einer mittels des Elektromotors relativ zueinander bewegbaren Zylinder-Kolben-Einheit ausgebildet sein, mit beidseitig des Kolbens vorgesehenen Hydraulikkammern, die jeweils mit einer Stirnseite des Rückwirkkolbens hydraulisch verbunden sind. Abgesehen davon, dass sich eine solche Fördervorrichtung durch eine einfache Bauweise und demzufolge durch einfache und sichere Funktion auszeichnet, erlaubt diese Fördervorrichtung eine äußerst feinfühlige Einstellung der Druckverhältnisse am besagten Rückwirkkolben, und zwar auch aufgrund eines geeignet festlegbaren Übersetzungsverhältnisses des zwischen dem Elektromotor und dem von diesem angetriebenen (bspw.) Kolben vorgesehenen Getriebes. Verschiedene Ausgestaltungen dieser Ausführungsform insbesondere hinsichtlich der Hydraulik werden an späterer Stelle als bevorzugte Ausführungsbeispiele noch näher beschrieben.

In einer alternativen Ausführungsform kann die Fördervorrichtung in Form einer vom Elektromotor angetriebenen Pumpe mit umkehrbarer Förderrichtung ausgebildet sein, wobei die hydraulische Verschaltung bevorzugt derart gestaltet ist, dass in Abhängigkeit von der Förderrichtung der Pumpe die eine oder die andere Stirnseite des Rückwirkkolbens mit positivem Differenzdruck beaufschlagt wird, und wobei sich die Richtungsumkehr ohne aufwändige Ventile einfach durch den Elektromotor bewerkstelligen lässt. Dabei ist es möglich, den Elektromotor nur gesteuert und nicht geregelt zu betreiben, und zwar insbesondere dann, wenn von den zum Rückwirkkolben führenden Hydraulikleitungen gedrosselte, zu einem drucklosen Abschnitt des Hydraulikkreislaufs führende Bypassleitungen abzweigen. Bei geeigneter Auslegung der Drosseln liegt dann quasi ein selbstregelndes System vor, das durch weitere Eingabegrößen, nämlich in Form einer Lenkhandhaben-Betätigung durch den Fahrer, nicht verstimmt wird. Es ist jedoch auch möglich, die Förderleistung der Pumpe unter Berücksichtigung weiterer Größen zu regeln, wofür es sich empfiehlt, insbesondere in den zum Rückwirkkolben bzw. zu dessen beiden Stirnseiten führenden Hydraulikleitungen Druckaufnehmer vorzusehen, deren Messwerte bei der Ansteuerung des Elektromotors berücksichtigt werden.

Ebenso kann der Elektromotor unter Berücksichtigung der mittels Druckaufnehmern erfassten Drücke in den von der Fördervorrichtung zu den Stirnseiten des Rückwirkkolbens führenden Hydraulikleitungen angesteuert werden, wenn die Fördervorrichtung als Zylinder-Kolben-Einheit ausgebildet ist, dessen Kolben (bevorzugt) mittels des Elektromotors gegenüber dem Zylinder verschoben wird. Der Elektromotor bzw. der Kolben kann dann also den Vorgaben des Fahrers mit seiner Lenkhandhabe entsprechend und hierzu ein gewünschtes Überlagerungsmoment erzeugend "nachgefahren" werden. Alternativ ist jedoch auch im Falle einer Zylinder-Kolben-Einheit als Fördervorrichtung eine "Selbstregelung" möglich, d.h. dass der Kolben nicht der Fahrer-Vorgabe nachgefahren werden muss, und zwar dann, wenn ein Getriebe zwischen dem Elektromotor und dem von diesem bewegten Kolben nicht selbsthemmend ausgebildet ist, d.h. dass unter Einfluss von Hydraulikkräften der Kolben der Zylinder-Kolben-Einheit unabhängig vom Elektromotor verlagert werden kann.

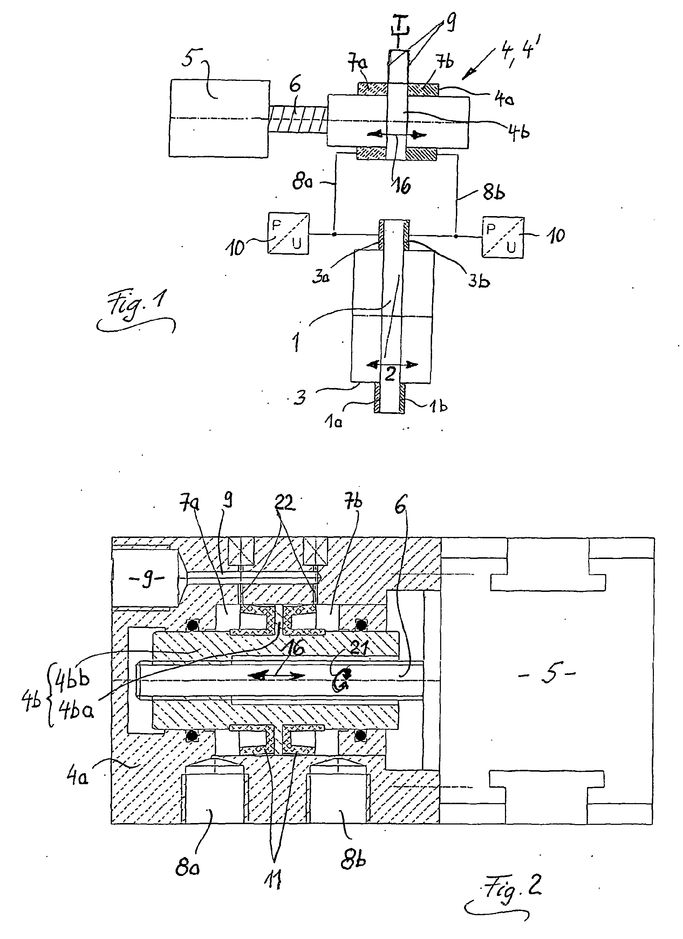

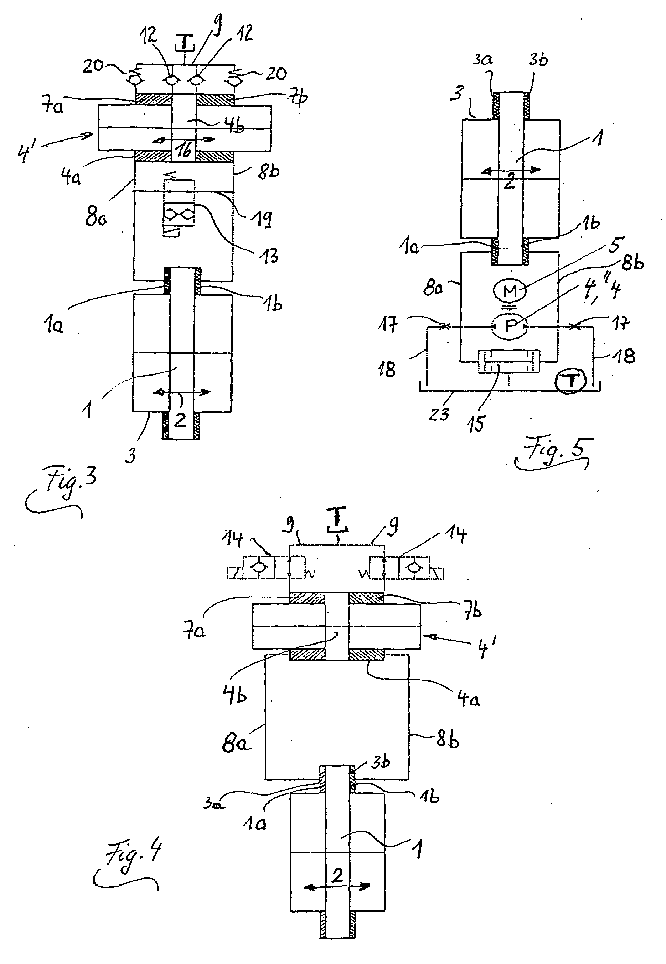

Im folgenden wird die Erfindung anhand abstrahiert dargestellter Ausführungsbeispiele weiter erläutert, wobei die beigefügte **Figur 1** das Prinzip einer ersten Ausführungsform zeigt, von der in **Figur 2** die Zylinder-Kolben-Einheit (als Fördervorrichtung) detaillierter dargestellt ist. Die **Figuren 3, 4** zeigen Abwandlungen der Ausführungsform nach Figur 1, während in **Figur 5** eine Variante mit einer Pumpe als Fördervorrichtung dargestellt ist. In allen Figuren tragen gleiche Elemente die gleichen Bezugsziffern.

Mit der Bezugsziffer 1 ist ein sog. Rückwirkkolben in einem Drehschieberventil eines im wesentlichen üblichen hydraulischen Servolenksystems gekennzeichnet. Dieser Rückwirkkolben 1 ist gemäß Pfeilrichtung 2 in einem nicht weiter dargestellten Zylinder 3 verschiebbar, wozu die beiden Stirnseiten 1a bzw. 1b des Rückwirkkolbens 1 mit unterschiedlichem Hydraulikdruck in den jeweiligen Zylinderräumen 3a bzw. 3b beaufschlagt werden können. Ein höherer Druck im in der Figur linksseitigen, senkrecht zur Zeichenebene ringförmigen Zylinderraum 3a veranlasst eine Verschiebung des Rückwirkkolbens 1 nach rechts und ein höherer Druck im in der Figur rechtsseitigen senkrecht zur Zeichenebene ringförmigen Zylinderraum 3b veranlasst eine Verschiebung des Rückwirkkolbens 1 nach links. Derartige Verlagerungen des Rückwirkkolbens 1 führen bekanntlich und wie weiter oben ausgeführt wurde zu einer Veränderung des sog. Handmoments an einer Lenkhandhabe (einem Lenkrad) eines Kraftfahrzeugs, das mit einem solchen Servolenksystem ausgerüstet ist.

Um unterschiedlichen Hydraulikdruck an die beiden Stirnseiten 1a, 1b des Rückwirkkolbens 1 bzw. in den Zylinderräumen 3a, 3b anlegen zu können, ist eine Fördervorrichtung 4 vorgesehen, die von einem Elektromotor 5 hierzu in geeigneter Weise betrieben werden kann. Bei den Ausführungsbeispielen nach den **Figuren 1 - 4** ist die Fördervorrichtung 4 als Zylinder-Kolben-Einheit 4' ausgebildet, mit einem in einem Zylinder 4a gemäß Pfeilrichtung 16 längsverschieblich (jedoch nicht verdrehbar) geführten Kolben 4b, der über ein geeignetes Getriebe 6 - hier in Form einer Gewindespindel ausgeführt - mit dem Elektromotor 5 bzw. mit dessen Abtriebswelle verbunden ist. Beidseitig des Kolbens 4b sind somit im Zylinder 4a senkrecht zur Zeichenebene ringförmige Hydraulikkammern 7a, 7b gebildet, von denen jede über eine Hydraulikleitung 8a bzw. 8b mit einem der Zylinderräume 3a, 3b des Zylinders 3 verbunden ist, d.h. die Hydraulikkammer 7a steht mit der ersten Stirnseite 1a und die Hydraulikkammer 7b steht mit der zweiten Stirnseite 1b des Rückwirkkolbens 1 in hydraulischer Verbindung.

In jeder Hydraulikkammer 7a, 7b mündet eine Versorgungsleitung 9, über die Hydraulikmedium aus einem mit dem Buchstaben T (für Tank) gekennzeichneten im wesentlichen drucklosen Abschnitt des Hydraulikkreislaufs des Servolenksystems in die jeweilige Hydraulikkammer 7a bzw. 7b gelangen kann. Beim Ausführungsbeispiel nach **Fig.1** mündet die Versorgungsleitung 9 jeweils unmittelbar neben dem Kolben 4b, wenn sich dieser in seiner im Zylinder 4a mittigen Neutral-Stellung oder Ausgangsstellung befindet. Sobald von dieser Neutral-Stellung ausgehend der Kolben 4a bspw. nach links verschoben wird, wird somit die Eintrittsöffnung der Versorgungsleitung in die linke Hydraulikammer 7a verschlossen, so dass bei einer weiteren Verlagerung des Kolbens 4a in diese Richtung (nach links) eine Teilmenge des in der Hydraulikkammer 7a befindlichen Hydraulikmediums über die Hydraulikleitung 8a zur Stirnseite 1a des Rückwirkkolbens 1 verdrängt wird. Dabei ist an der Hydraulikleitung 8a sowie an der Hydraulikleitung 8b jeweils ein Druckaufnehmer 10 vorgesehen, dessen Signale, nämlich den aktuellen Druck in der jeweiligen Hydraulikleitung 8a bzw. 8b wiedergebende Signale, an ein nicht gezeigtes elektronisches Steuergerät geleitet werden, welches - wie weiter oben ausgeführt wurde - auch unter Berücksichtigung dieser Druckwerte - den Elektromotor 5 den jeweiligen Anforderungen entsprechend ansteuert.

In **Fig.2** ist die Zylinder-Kolben-Einheit 4' aus Fig.1 zusammen mit dem daran angeflanschten Elektromotor 5 etwas detaillierter dargestellt. Der Kolben 4b ist demnach aus einem sog. Wirkabschnitt 4ba, der mit den Hydraulikkammern 7a, 7b zusammenwirkt bzw. deren Volumen verändert, und einem sog. Führungsabschnitt 4bb, der mit dem Gebtriebe 6 in Form einer Gewindespindel zusammenwirkt, zusammengesetzt. Figürlich nicht dargestellt ist dabei die am Führungsabschnitt 4bb vorgesehene Verdrehsicherung des Kolbens 4b, die verhindert, dass sich der Kolben 4 bei Rotation der Gewindespindel 6 gemäß Pfeilrichtung 21 auf dieser aufschraubt, sondern sicherstellt, dass der Kolben 4b dann gemäß Pfeilrichtung 16 längsverschoben wird.

In Fig.2 erkennt man an den beiden Seiten des sog. Wirkabschnitts 4ba des Kolbens 4b vorgesehene Dichtelemente 11, wobei die beiden Versorgungsleitungen 9 über sog. "Schnüffelbohrungen" 22 in der Wand des Zylinders 4a selbstverständlich nicht unmittelbar neben dem in Neutralstellung liegenden Kolben 4b sondern dafür im wesentlichen direkt neben diesen Dichtelementen 11 in der jeweiligen Hydraulikammer 7a, 7b münden. Die Hydraulikleitungen 8a, 8b hingegen zweigen vom Endabschnitt der jeweiligen Hydraulikkammer 7a, 7b ab.

Nachdem nicht sichergestellt werden kann, dass sich der Kolben 4b in seiner Ausgangsstellung stets ganz exakt mittig im Zylinder 4a befindet, könnten Fälle auftreten, in denen bei einer geringen Verschiebung des Kolbens 4b zunächst Hydraulikmedium über die jeweilige Schnüffelbohrung 22 und die sich daran anschließende Versorgungsleitung 9 aus der sich verkleinernden Hydraulikammer 7a bzw. 7b verdrängt wird, und zwar solange bis der Kolben 4b bzw. dessen jeweiliges Dichtelement 11 die jeweilige sog. "Schnüffelbohrung" 22 überdeckt hat. Um diesen evtl. ungewünschten Effekt zu verhindern, sind beim Ausführungsbeispiel nach **Fig.3** in den zu den "Schnüffelbohrungen" 22 führenden Versorgungsleitungen 9 zu den Hydraulikkammern 7a, 7b hin öffnende Rückschlagventile 12 vorgesehen. Diesen parallel geschaltet sind aus Sicherheitsgründen druckgesteuerte Entlastungsventile 20.

**Fig.3** zeigt weiterhin zwischen den von den Hydraulikkammern 7a, 7b zum Rückwirkkolben 1 führenden Hydraulikleitungen 8a, 8b eine mit einem stromlos offenen Sperrventil 13 versehene Sicherheits-Verbindungsleitung 19. Sollten irgendwelche Störfälle auftreten, so kann - falls aufgrund mangelnder Stromversorgung nicht ohnehin bereits erfolgt - dieses Sperrventil 13 geöffnet werden, wodurch die beiden Hydraulikleitungen 8a, 8b in einem Kurzschluss miteinander verbunden sind, so dass keine ungewollte Beaufschlagung des Rückwirkkolbens 1 mit Hydraulikdruck erfolgen kann. Wenngleich eine solche Sicherheits-Verbindungsleitung 19 nur in dieser Figur dargestellt ist, kann dies selbstverständlich bei allen anderen Ausführungsbeispielen auch vorgesehen sein.

Beim Ausführungsbeispiel nach **Fig.4** münden die Hydraulik-Versorgungsleitungen 9 der Zylinder-Kolben-Einheit 4' im wesentlichen endseitig des in Ausgangsstellung mittig im Zylinder 4a liegenden Kolbens. 4b in den Hydraulikkammern 7a, 7b und es sind in den Hydraulik-Versorgungsleitungen 9 geeignet schaltbare Sperrventile 14 vorgesehen. Mit dieser Ausbildung der Versorgungsleitungen 9 ist gewährleistet, dass unabhängig von der Lage des Kolbens 4b im Zylinder 4a jede Hydraulikkammer 7a, 7b bei stillstehendem Kolben 4b sicher mit Hydraulikmedium befüllt werden kann; jedoch muss zur Erzielung der gewünschten Funktion dann, wenn der Kolben 4b im Sinne einer Verkleinerung eines der beiden Hydraulikräume 7a, 7b bewegt wird, das diesem zugeordnete Sperrventil 14 geschlossen sein bzw. werden. Vorteilhafterweise sind die hier diese Sperrventile 14 als Umschaltventile zwischen Durchgangsstellung und Rückschlagventil ausgebildet.

Beim Ausführungsbeispiel nach **Fig.5** ist die Fördervorrichtung 4 in Form einer vom Elektromotor 5 angetriebenen Pumpe 4" mit umkehrbarer Förderrichtung ausgebildet, wobei die hydraulische Verschaltung derart gestaltet ist, dass in Abhängigkeit von der Förderrichtung der Pumpe 4" die erste Stirnseite 1a oder die zweite Stirnseite 1b des Rückwirkkolbens 1 mit positivem Differenzdruck beaufschlagt wird. Pumpensaugseitig ist ein sog. Wechselventil 15 in hierfür üblicher Verschaltung vorgesehen, das sicherstellt, dass von der jeweiligen Druckseite der Pumpe 4" kein Hydraulikmedium direkt in einen Tank 23, aus welchem die Pumpe fördert oder dgl., d.h. allgemein in einen im wesentlichen drucklosen AbschnittT des Hydraulikkreislaufs des Servolenksystems gelangen kann, während dieses Wechselventil 15 gleichzeitig eine Verbindung zwischen der Pumpen-Saugseite und diesem Tank 23 bzw. drucklosen Abschnitt T freischaltet. Daneben zweigen jedoch von den zum Rückwirkkolben 1 führenden Hydraulikleitungen 8a, 8b mit geeigneten Drosseln 17 versehene, zu einem drucklosen Abschnitt T des Hydraulikkreislaufs führende Bypassleitungen 18 ab. Damit liegt bei geeigneter Auslegung dieser Drosseln 17 quasi ein selbstregelndes System vor, das durch weitere Eingabegrößen, nämlich in Form einer Lenkhandhaben-Betätigung durch den Fahrer, die sich ebenfalls auf den Hydraulikdruck an den Stirnseiten 1a, 1b des Rückwirkkolbens 1 auswirkt, nicht verstimmt wird. Dabei kann dies sowie eine Vielzahl weiterer Details durchaus abweichend von obigen Erläuterungen gestaltet sein, ohne den Inhalt der Patentansprüche zu verlassen.

## Patentansprüche

1. Hydraulisches Servolenksystem für ein Kraftfahrzeug, mit einem Drehschieberventil und einem wahlweise veränderbar auf seinen beiden Stirnseiten (1a, 1b) verschieden mit Hydraulikmedium beaufschlagbaren Rückwirkkolben (1), der beaufschlagungsabhängig ein Moment auf den Drehschieber überträgt, das eine Veränderung des an einer Lenkhandhabe resultierenden Handmoments des Fahrers zur Folge hat, derart, dass außer einem Unterstützungsmoment auch ein Überlagerungsmoment zum Handmoment erzeugt werden kann, welches zu einer Vergrößerung oder Verringerung des Handmoments oder zu einer Umkehr der Richtung des Handmoments führt,
wobei zur gewünschten hydraulischen Beaufschlagung des Rückwirkkolbens (1) eine von einem geeignet ansteuerbaren Elektromotor (5) angetriebene Fördervorrichtung (4, 4', 4") vorgesehen ist, die Hydraulikmedium aus einem im wesentlichen drucklosen Abschnitt (T) des Hydraulikkreislaufs des Servolenksystems bezieht.

2. Servolenksystem nach Anspruch 1,
**dadurch gekennzeichnet, dass** die Fördervorrichtung (4) mit dem Elektromotor (5) am Drehschieberventil angebaut ist und das Hydraulikmedium aus einer Tank-Rücklaufleitung bezieht.

3. Servolenksystem nach Anspruch 1 oder 2,
**dadurch gekennzeichnet, dass** die Fördervorrichtung (4) in Form einer mittels des Elektromotors (5) relativ zueinander bewegbaren Zylinder-Kolben-Einheit (4') ausgebildet ist, mit beidseitig des Kolbens (4b) vorgesehenen Hydraulikkammern (7a, 7b), die jeweils mit einer Stirnseite (1a, 1b) des Rückwirkkolbens (1) hydraulisch verbunden sind.

4. Servolenksystem nach Anspruch 3,
**dadurch gekennzeichnet, dass** Hydraulik-Versorgungsleitungen (9) der Zylinder-Kolben-Einheit (4') unmittelbar beidseitig des in Ausgangsstellung mittig im Zylinder (4a) liegenden Kolbens (4b) in den Hydraulikkammern (7a, 7b) münden.

5. Servolenksystem nach Anspruch 4,
**dadurch gekennzeichnet, dass** in den Versorgungsleitungen (9) zu den Hydraulikkammern (7a, 7b) hin öffnende Rückschlagventile (12) vorgesehen sind.

6. Servolenksystem nach Anspruch 3,
**dadurch gekennzeichnet, dass** Hydraulik-Versorgungsleitungen (9) der Zylinder-Kolben-Einheit (4') im wesentlichen endseitig des in Ausgangsstellung mittig im Zylinder (4a) liegenden Kolbens (4b) in den Hydraulikkammern (7a, 7b) münden und dass in den Hydraulik-Versorgungsleitungen (9) geeignet schaltbare Sperrventile (14) vorgesehen sind.

7. Servolenksystem nach einem der vorangegangenen Ansprüche,
**dadurch gekennzeichnet, dass** zwischen den von den Hydraulikkammern (7a,7b) zum Rückwirkkolben (1) führenden Hydraulikleitungen (8a, 8b) eine mit einem stromlos offenen Sperrventil (13) versehene Sicherheits-Verbindungsleitung (19) vorgesehen ist.

8. Servolenksystem nach Anspruch 1 oder 2,
**dadurch gekennzeichnet, dass** die Fördervorrichtung (4) in Form einer mittels des Elektromotors (5) angetriebenen Pumpe (4") mit umkehrbarer Förderrichtung ausgebildet ist.

9. Servolenksystem nach Anspruch 8,
**dadurch gekennzeichnet, dass** von den zum Rückwirkkolben (1) führenden Hydraulikleitungen (8a, 8b) gedrosselte, zu einem drucklosen Abschnitt (T) des Hydraulikkreislaufs führende Bypassleitungen (18) abzweigen.

10. Servolenksystem nach einem der vorangegangenen Ansprüche,
**dadurch gekennzeichnet, dass** Druckaufnehmer (10) an den zum Rückwirkkolben (1) führenden Hydraulikleitungen (8a, 8b) vorgesehen sind, deren Messwerte bei der Ansteuerung des Elektromotors (5) berücksichtigt werden.

## Claims

1. A hydraulic power-assisted steering system for a motor vehicle comprising a rotary slide valve and a reaction piston (1) which can be impinged on with hydraulic medium in a selectively variable manner to different intensities on its two end faces (1a, 1b), which reaction piston transfers, depending upon the impingement, a torque to the rotary slide, the torque having as a consequence a change in the driver's manual torque resulting at a steering handle such that, in addition to a supporting torque, a torque superimposed on the manual torque can also be generated, which leads to an increase or decrease in the manual torque or to a reversal of the direction of the manual torque, wherein, for the desired hydraulic impingement upon the reaction piston (1), a conveyance device (4, 4', 4") driven by a suitably controllable electric motor (5) is provided, which conveyance device draws hydraulic medium from a substantially pressureless section (T) of the hydraulic circuit of the power-assisted steering system.

2. A power-assisted steering system according to claim 1, **characterised in that** the conveyance device (4) with the electric motor (5) is mounted on the rotary slide valve and draws the hydraulic medium from a tank recycling line.

3. A power-assisted steering system according to claim 1 or 2, **characterised in that** the conveyance device (4) is configured in the form of a cylinder-piston unit (4'), in which the cylinder and piston can be moved relative to one another by means of the electric motor (5), with hydraulic chambers (7a, 7b) provided on either side of the piston (4b), which are each hydraulically connected to an end face (1a, 1b) of the reaction piston (1).

4. A power-assisted steering system according to claim 3, **characterised in that** hydraulic supply lines (9) of the cylinder-piston unit (4') open into the hydraulic chambers (7a, 7b) directly on either side of the piston (4b) located in the starting position in the centre of the cylinder (4a).

5. A power-assisted steering system according to claim 4, **characterised in that** check valves (12) opening toward the hydraulic chambers (7a, 7b) are provided in the supply lines (9).

6. A power-assisted steering system according to claim 3, **characterised in that** hydraulic supply lines (9) of the cylinder-piston unit (4') open into the hydraulic chambers (7a, 7b) substantially on the end side of the piston (4b) located in the starting position in the centre of the cylinder (4a) and **in that** stop valves (14) which can be suitably switched are provided in the hydraulic supply lines (9).

7. A power-assisted steering system according to any one of the preceding claims, **characterised in that** a connecting safety line (19) provided with a de-energised, open stop valve (13) is provided between hydraulic lines (8a, 8b) leading from the hydraulic chambers (7a, 7b) to the reaction piston (1).

8. A power-assisted steering system according to claim 1 or 2, **characterised in that** the conveyance device (4) is configured in the form of a pump (4") driven by means of the electric motor (5) and having a reversible direction of conveyance.

9. A power-assisted steering system according to claim 8, **characterised in that** throttled by-pass lines (18) leading to a pressureless section (T) of the hydraulic circuit branch off from the hydraulic lines (8a, 8b) leading to the reaction piston (1).

10. A power-assisted steering system according to any one of the preceding claims, **characterised in that** pressure sensors (10) are provided on the hydraulic lines (8a, 8b) leading to the reaction piston (1), the measured values of which are taken into account when controlling the electric motor (5).

## Revendications

1. Système hydraulique de direction assistée de véhicule automobile comportant une vanne à tiroir rotatif et un piston de réaction (1) qui peut être sollicité sélectivement de manière variable sur ses deux faces frontales (1a, 1b) différemment par du fluide hydraulique, ce piston transmettant un couple au tiroir rotatif en fonction de sa sollicitation, entraînant une variation du couple manuel du conducteur résultant au niveau du volant de direction de façon à pouvoir générer, en plus d'un couple d'assistance, également un couple combiné au couple manuel qui augmente ou diminue le couple manuel ou aboutit à une inversion du sens du couple manuel,
et pour la sollicitation hydraulique souhaitée du piston de réaction (1), un dispositif de pompage (4, 4', 4") entraîné par un moteur électrique (5) commandé de manière appropriée, reçoit le liquide hydraulique d'un segment (T) pratiquement sans pression du circuit hydraulique du système de direction assistée.

2. Système de direction assistée selon la revendication 1,
**caractérisé en ce que**
le dispositif de pompage (4) avec le moteur électrique (5) sont montés sur la vanne à tiroir rotatif et il prend le liquide hydraulique d'une conduite de retour au réservoir.

3. Système de direction assistée selon la revendication 1 ou 2,
**caractérisé en ce que**
le dispositif de pompage (4) est formé par un ensemble cylindre-piston (4') mobiles l'un par rapport à l'autre par le moteur électrique (5), avec des chambres à liquide hydrauliques (7a, 7b) prévues de part et d'autre du piston (4b) et qui sont reliées hydrauliquement chacune à une face frontale (1a, 1b) du piston de réaction (1).

4. Système de direction assistée selon la revendication 3,
**caractérisé en ce que**
les conduites d'alimentation hydrauliques (9) de l'unité cylindre-piston (4') débouchent directement dans les chambres hydrauliques (7a, 7b) de part et d'autre du piston (4b) qui en position de repos est au milieu du cylindre (4a).

5. Système de direction assistée selon la revendication 4,
**caractérisé par**
des clapets anti-retour (12) s'ouvrant vers les chambres hydrauliques (7a, 7b) dans les conduites d'alimentation (9).

6. Système de direction assistée selon la revendication 3,
**caractérisé en ce que**
les conduites d'alimentation hydrauliques (9) de l'unité cylindre-piston (4') débouchent pratiquement dans l'extrémité des chambres hydrauliques (7a, 7b), pour le piston (4b) qui en position de repos est au milieu du cylindre (4a), et
les conduites d'alimentation hydrauliques (9) comportent des clapets d'arrêt (14) commandés de manière appropriée.

7. Système de direction assistée selon l'une des revendications précédentes,
**caractérisé par**
une conduite de liaison de sécurité (19) munie d'un clapet d'arrêt (13) s'ouvrant lorsque le courant est coupé, entre les conduites hydrauliques (8a, 8b) reliant les chambres hydrauliques (7a, 7b) au piston de réaction (1).

8. Système de direction assistée selon la revendication 1 ou 2,
**caractérisé en ce que**
le dispositif de pompage (4) est une pompe (4") entraînée par le moteur électrique (5) et à sens de pompage réversible.

9. Système de direction assistée selon la revendication 8,
**caractérisé en ce que**
les conduites de dérivation (18), étranglées, conduisant au segment (T) sans pression du circuit hydraulique, dérivent des conduites hydrauliques (8a, 8b) reliées au piston de réaction (1).

10. Système de direction assistée selon l'une des revendications précédentes,
**caractérisé en ce que**
les conduites hydrauliques (8a, 8b) reliées au piston de réaction (1) comportent des capteurs de pression (10) dont les valeurs de mesure sont prises en compte pour la commande du moteur électrique (5).
